Europäisches Patentamt

European Patent Office

Office européen des brevets

(19)

(11) Publication number: **0 173 662**
**A1**

(12) # EUROPEAN PATENT APPLICATION

(21) Application number: **85850252.9**

(22) Date of filing: **31.07.85**

(51) Int. Cl.⁴: **F 28 D 20/00**, F 24 H 7/04

(30) Priority: **31.07.84 SE 8403924**

(43) Date of publication of application: **05.03.86**
**Bulletin 86/10**

(84) Designated Contracting States: **AT CH DE FR GB IT LI NL SE**

(71) Applicant: **Smart & Simple Energy Systems AB, Kungsgatan 20, S-441 30 Alingsas (SE)**

(72) Inventor: **Arvidsson, Sven-Bertil Rune, Trädgardsgatan 18, S-441 33 Alingsas (SE)**

(54) **Method and means for storing thermal energy.**

(57) The present invention relates to a method and a means for the storage of thermal energy, in particular storage of a kind in which the cycle times extend from a number of hours to storage for an entire season. The invention is characterized in that a heating medium is caused to circulate inside circuit loops (2), the diameter of which is less than 5 mm, and in that the circuit loops, with a maximum length of 10 m, are placed in a substance which can absorb, but above all emit energy in the course of thermal conductance via the walls of the circuit loops.

0173662

## METHOD AND MEANS FOR THE STORAGE OF THERMAL ENERGY

The present invention relates to a method and a means for the storage of thermal energy, intended in particular for storage with cycle times from 12 hours up to 6 months.

The commercial storage of thermal energy on a large scale is regarded as a practical possibility only if the total quantity of energy stored amounts to about 100 000 kWh, i.e. an alternative for a single-family house is not available.

The active accumulation of energy during the six summer months has taken place in large clay stores with a depth exceeding 30 m. The low-temperature energy which can then be drawn upon during the six winter months is used for input into a heat pump which increases the temperature to a useful level. Known underground energy stores are extremely difficult to manage with regard to the continuous withdrawal or emission of high energy outputs. This may be explained by the fact that the temperature around the hoses arranged in the ground relatively quickly assumes an increased (or, in the case of heat withdrawal, reduced) level, preventing the effective exchange of energy.

The object of the present invention is to make available a method and a means for the storage of thermal energy with cycle times ranging from half a day to half a year, and where the quantity of energy stored may be very much less compared to the quantity required by previously disclosed methods.

A further object of the invention is to make available a method and a means for the storage of thermal energy in which an exceptionally good energy emission capacity and energy absorption capacity are achieved.

Yet another object of the invention is to make available a method and a means for the storage of thermal energy in which a two-stage effect is achieved with regard to the useful energy level, which means that an essentially constant high level of temperature is obtained from the primary energy output.

A further object of the present invention is to make available a method and a means for the storage of thermal energy in which it is possible to store large quantities of energy efficiently in a small mass of earth, i.e. the temperature is raised (lowered) rapidly to a high (low) level, whereupon said small mass of earth can be used as a radiating body by which the surrounding volume of soil is affected and in this way serves as 'additional capacity' for the purposes of energy storage.

Yet another object of the present invention is to make available a method and a means for the storage of thermal energy which is able in an apparently advantageous manner to serve as a 'peak load reserve' for an ordinary heat pump installation supplied from a wind convector, i.e. the storage means in accordance with the invention is switched in at low outdoor temperatures.

The above-mentioned objects of the invention are realized by the method and the means having been given the characteristics indicated in the Patent Claims.

By causing a heating medium to circulate in a number of circuit loops connected in parallel, the diameter of which is less than 5 mm, said loops having a maximum length of 10 m and being placed in a substance which is able to absorb and emit energy by thermal conductance through the walls of the circuit loops, a comparatively large surface area of the substance in which they are placed will be active by comparison with the total volumetric flow, i.e. a small volume of the heating medium per unit of time will flow through each circuit loop. This produces the advantage that the store is able both to absorb and to emit a large total flow of energy.

In one embodiment of the invention the circuit loops are inserted in a mass of earth, with the distance between each inserted loop being less than 0.5 m. The short distance between the individual loops means that the stored energy is relatively accessible since the thermal transport path is short in, for instance, thermally inert clay. Although the maximum storage capacity may be regarded as low in relation to the number of inserted loops by comparison with conventional stores, the higher temperature which it is possible to achieve offers a distinct advantage with regard to heating up the volume of earth outside the storage body perforated by circuit loops. A significant proportion of the energy entered outside the store can thus be recovered by removing energy from the store.

If a high, continuous energy emission capacity is desirable, then it is possible in accordance with the invention to cause each circuit loop to be in contact with a substance which exhibits a phase alternation capacity at an appropriate preferred temperature. The substance, preferably in the form of a salt, is suitably placed inside containers, for example hollow rods, which in turn can be inserted into the ground. It is possible in this way to make use of types of soil other than clay to construct underground energy stores. By choosing a particular blend of salts, the melting temperature can be selected to suit each specific application.

By using a limited amount of salt with each circuit loop, it is possible to prevent a number of areas of the volume of salt from being excluded from the phase alternation process, since the distance between each salt particle and the circuit loop will, as a general rule, not exceed a distance which corresponds to one half of the thickness of the rod. In the case of homogeneous salt layers, these islands have proved to constitute a serious source of interference with the function.

Two different storage means are combined in a variant of the invention, these being a store for low-value energy and a store for high-value energy. It is thus possible to charge the high-energy store with electrical energy produced at low cost in readiness for the situation in which a need arises. The high-energy store can be located indoors, whilst the low-energy

store can be located out of doors — under the ground. The high-energy store can be positioned directly adjacent to an energy consumer, or it may also be divided up into a number of small high-energy stores, each positioned adjacent to an energy consumer. The small, high-energy stores can be either salt stores or water stores, of the water heater type, or a combination of the two types. Charging of the high-energy store can take place via a centrally located electric water heater, from which subsidiary liquid flows are distributed to the consumers/small high-energy stores.

One type of high-energy store consists of series-connected, upright cylindrical bodies. These can be connected to one another via capillary pipes connected between the bottom and the top of adjacent bodies. For the purposes of charging a heat-conducting fluid medium is caused to flow in one direction through the series-connected bodies. The direction of flow of the heat-conducting fluid medium is reversed for the purposes of discharging, which means that the last body to be charged is the first to be discharged. The temperature level must be kept relatively high if bodies connected to one another in series are to be capable of producing a higher output. It may be necessary, therefore, to charge the store by the use of a heat pump, which is possible when the total load on the electricity supply mains is low.

By making use of two stores — one executed with parallel-connected and the other with series-connected circuit

loops — in one and the same energy supply system for the heating of a building, for example, in which energy from the store with parallel loops is transformed up via the heat pump and is fed into the other store, a unique possibility is afforded for matching the operation of the heat pump via the electricity supply mains. Control impulses in the electricity supply mains can be used to switch on and off the heat pump, which is not normally required to operate during the daytime or at other times when the supply mains is under heavy load. The capacity of a high-energy store is adjusted to suit the availability and, to a certain extent, the price of electrical energy, and the demand for 'easily accessible' energy. As far as the dimensioning of the system for a building is concerned, it is natural to dimension the high-energy store so that it can be charged with sufficient energy to heat the building for a period of between 12 and 24 hours.

By utilizing cheap electrical energy over quite long periods, the electrical power used need not be so great. The division of a high-energy store into a number of small stores adjacent to the energy consumers offers the advantage that electrical power of 1 kW for 5 hours will be sufficient to increase the temperature by $50^{\circ}C$ in 5 small stores with a water volume of 18 litres. Instead of increasing the temperature of the water, the subsidiary stores may contain a salt mixture in which the energy supplied brings about phase alternation of the salt from the solid to the liquid phase. The subsidiary store can be given more compact dimensions in this way. When energy is taken from a store of this nature — the water heater type — water is caused to flow through the large number of parallel-connected circuit loops which are evenly distributed throughout the salt mixture. The many small subsidiary flows combine to produce an acceptable total flow for showering, for instance.

In accordance with the invention salt-based energy stores can also be so arranged as to operate at two output levels. This is achieved by combining together two substances capable of individual phase alternation, where one of the substances melts at a lower temperature and the other substance melts at a higher temperature. The substance which melts at a higher temperature will thus float in the other, molten substance as this was caused to melt during the energy input process. Should the occasion arise, therefore, more energy can be charged into the system by the transfer of phase alternation heat to the substance which is more difficult to melt. The two substances may, if required, be kept separate and may, for example, be arranged at separate levels along the many parallel-connected circuit loops.

Larger quantities of energy can also be stored by the use of a significantly higher temperature level. Although the use of plastics material is advantageous in the embodiments described above, it is essential to use a metal body at higher temperatures. Although metal alloys exist which melt at a temperature which is in iteself acceptably low for plastics materials, the question which arises here relates to aluminium alloys, for example, in respect of which the storage of energy by causing the metal to melt is used only exceptionally, since the metal body, if it is to be capable of uniform and slow cooling, should preferably be perforated by holes or ducts through which a heat-conducting medium can be made to flow. It is possible in this way to produce a system which requires low power for a long period for its charging and which can produce high power for a shorter time during the discharge mode. It is of critical importance in this respect that a large number of circuit loops which have been connected together in parallel should be used for the case in which a high, continuous power output is required.

Within the scope of the present invention it is also possible to provide an 'extremely' high-energy store by discharging the store in order to produce steam, which is then used to drive a steam turbine which in turn drives a generator.

An 'extremely' high-energy store can be used to power, for example, both a washing machine and a cooker, preferably for steam cooking. The advantage of a store of the kind described immediately above is that the existing electricity supply mains need be loaded with only a low power requirement, and perhaps only then during the night, but without having to be deprived of energy during the day-time.

The invention is described below with reference to the embodiments illustrated in the accompanying drawings, in which

Fig. 1    shows in perspective view a ground accumulator in accordance with a first embodiment, and in which a partially enlarged view of the top right-hand corner shows two alternative embodiments of the accumulator loops;

Fig. 2    shows a series—connected energy accumulator in accordance with the invention, this being a so—called high—energy accumulator, in perspective view and in a state in which it has not been rolled up;

Fig. 3    shows a plan view of a high—energy accumulator with an insulating casing;   and

Fig. 4    shows a block diagram of a complete energy supply system using two different types of store executed in accordance with  the idea of invention.

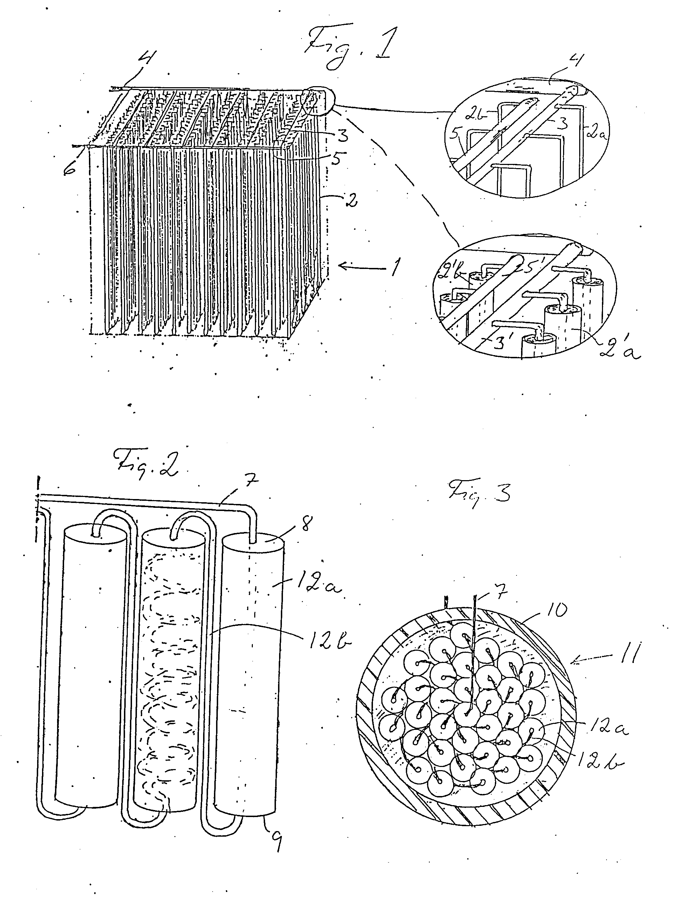

Illustrated in Fig. 1 is the energy accumulator 1 consisting of circuit loops 2 arranged in symmetrical rows. The loops have two parts 2a and 2b, each of which is connected to a supply or return branch circuit 5;3. The return branch circuit 3 is in turn connected to a distribution branch circuit 6.   All the branch circuits are so dimensioned as to provide an essentially uniform flow through all the circuit loops 2.

The upper, partially enlarged view in Fig. 1 shows circuit loops of small diameter, whilst the lower, partially enlarged view shows accumulator loops 2'a and 2'b introduced into a larger circuit body which contains a substance possessing the capacity for phase alternation. Alternatively, the larger circuit body may have dimensions such as to enable it to accommodate the circuit loop within the same outer casing. A store containing a substance with the capacity for phase alternation is also well suited to installation in drier ground, when it provides an outstanding short-term store.

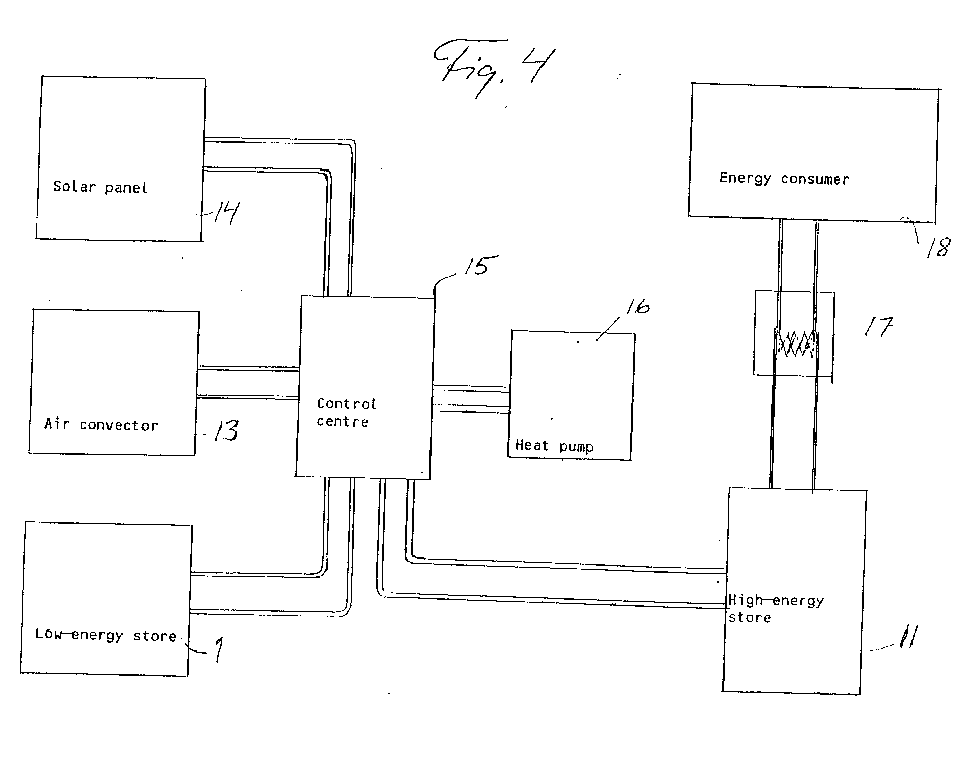

Illustrated in Fig. 2 is a variant of the energy accumulator in which the parts 12a and 12b of the circuit have different diameters and in which the parts of the circuit are series-connected. One part 12a is thus very much larger than the other 12b, which means that the energy content inside the accumulator is in direct proportion to the volume of the energy-conducting fluid medium. As shown in the Figure, the thinner circuit 7 may also be so arranged as to run through the larger part 12a, either straight or in the form of a spiral for the case in which melting is required.

Illustrated in Fig. 3 is the manner in which the accumulator loops have been coiled around a central part which is in direct contact with the circuit 7 which, when the accumulator 11 is charged, constitutes the supply circuit for an energy-conducting fluid medium. An insulating casing 10 is arranged around the urpright parts 12a and 12b of the accumulator. If the store 11 is kept indoors inside the building which is to be heated, then no insulation will be required, since the construction of the store is in fact self-insulating, and since it is only the outermost parts that can lose energy density through radiation and convection.

Fig. 4 shows a block diagram of an energy supply system in which two different embodiments of the energy accumulator in accordance with the invention are included. The principal components are the two stores 1 and 11 and the control centre and the heat pump 15 and 16.

The control centre 15 may be more or less sophisticated and may, in its most advanced configuration, possess a microprocessor which can be fed with information relating to the price of electrical energy, heating needs, outdoor temperature, storage temperatures, wind velocity, time of day and time of year, humidity of the air and cooling needs. In its more simple configuration, it need only monitor the indoor temperature, the time of day and the energy level in the high-energy store 11. The control centre 15 should preferably be equipped with a relay to take care of the switching on and off of a supply of cheap electrical energy to the heat pump 16 when tone frequencies in the electricity supply mains provide the relevant information and if there is a need to charge one or other of the stores 1 and 11.

The air convector 13 or the solar panel 14 should, of course, be used primarily for the charging of the low-energy store 1, although under special circumstances, in particular during the summer when cooling of the building is desirable, good reasons may exist to use the heat pump (refrigeration compressor) 15 to lower the temperature of the store if a heat-wave is expected and if the cold fed into the high-energy store is felt to be insufficient for the air conditioning needs of the building.

Details of the anticipated weather conditions are best transmitted in coded form by means of frequency impulses in the electricity supply mains or via radio transmitters.

The control centre 15 may also be so arranged as to monitor whether charging of the store 1 primarily is being achieved more efficiently by the solar panel 14 or by the air convector 13.

In the event of it being necessary to connect the energy supply system using two energy accumulators 1, 11, as illustrated schematically in Fig. 4, to a conventional metal pipe system for the distribution of the energy to the building, it is advisable to transfer the energy to that system via a heat exchanger 17.

In the case of the installation of a new system or the total renovation of the existing heating system in a building, the energy can be taken directly from the high-energy store 11 to each area which is to be heated. This can be done by arranging special heat exchangers adjacent to each accumulator part 12a in the high-energy store. A number of heat exchangers may possibly be connected in parallel, depending on the particular power requirement. The possibility is afforded here, too, to allocate priority to the areas which are to be heated  by connecting the areas with the highest priority  to accumulator parts 12a located in or near the centre of the store 11, since this part of the store will maintain the charged temperature for the longest time. These heat exchangers in the parts 12a of the accumulator may be either internal or external, for example in the form of internal or external loops (spiral loops) in contact with the surface of the casing of each part 12a. Water heating can, if necessary, be provided in a similar fashion (via copper spirals) positioned around the one or more most central parts 12a of the accumulator.

The invention is not restricted to the typical embodiments described above, and modifications may be made within the scope of the following Patent Claims.

PATENT CLAIMS

1. Method for the storage of thermal energy, c h a r a c t e r —
   i z e d  in that a heating medium is caused to circulate
   inside circuit loops, the diameter of which is less than 5
   mm, and in that the circuit loops, with a maximum length of
   10 m, are placed in a substance which can absorb and emit
   energy in the course of thermal conductance through the walls
   of the circuit loops.

2. Method as claimed in Patent Claim 1, c h a r a c t e r —
   i z e d  in that the circuit loops are pushed down into the
   ground at a distance of less than 0.5 m from one another.

3. Means for the storage of thermal energy and for the execution
   of the method as claimed in Patent Claim 1, c h a r a c t e
   r i z e d  by a number of circuit loops (2;12) with a
   diameter of less than 5 mm and with a length of less than 10
   m which are placed in a substance with the ability to absorb
   and emit energy.

4. Means as claimed in Patent Claim 3, c h a r a c t e r i z e d
   in that the circuit loops (2) are connected in parallel
   between supply and return branch circuits (5,3).

5. Means as claimed in Patent Claim 4, c h a r a c t e r i z e d
   in that the supply and return branch circuits run from a
   distribution branch circuit (6) and from a collecting branch
   circuit (4).

0173662

6. Means as claimed in Patent Claims 3 — 5, c h a r a c t e r — i z e d  in that the circuit loops (2) are inserted to a maximum depth of 5 m into a mass of earth.

7. Means as claimed in any one or more of Patent Claims 3 — 6, c h a r a c t e r i z e d  in that the circuit loops are enclosed either in whole or in part by a considerably larger body (2'a;12a) or are embedded in a body filled with a material possessing the capacity for phase alternation.

8. Means as claimed in Patent Claim 7, in which each of the circuit loops is inserted into its own salt—filled rod, c h a r a c t e r i z e d  in that the rods are inserted to a depth of about 2 m into a mass of earth, said rods having a maximum diameter of 150 mm.

9. Means as claimed in Patent Claims 3, 4 and 7, c h a r a c — t e r i z e d  in that the circuit loops made of plastic are arranged inside a water heater, in which the the material with the capacity for phase alternation is caused to melt by resistance wires embedded in it.

10. Means as claimed in any one or more of Patent Claims 3 — 9, c h a r a c t e r i z e d  in that the means is charged via one or more of the means listed below depending on the price and availability of electric current, heating needs, outdoor temperature, storage tempreratures, wind velocity, time of year, time of day and humidity of the air:

a)   low-temperature store (1)

b)   air convector (13)

c)   solar panel (14)

d)   heat pump (16)

1/2

0173662

Fig. 1

Fig. 2

Fig. 3

0173662

Low-energy store 〜 7

Air convector 〜 13

Solar panel 〜 14

Control centre 〜 15

Heat pump 〜 16

High-energy store 〜 11

Energy consumer 〜 18

17

Fig. 4

0173662

European Patent Office

**EUROPEAN SEARCH REPORT**

Application number

EP 85 85 0252

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 010 819 (AKZO N.V.)<br>* Page 1, lines 1-7,17-27; page 8, lines 28-36; figure 6 * | 1,3 | F 28 D 20/00<br>F 24 H 7/04 |
| Y | | 2,4-6 | |
| Y | US-A-4 267 881 (BYERLY)<br>* Column 2, line 26 - column 3, line 4; column 3, lines 30-56; figures * | 4-6 | |
| A | | 1,3,10 | |
| Y | PATENTS ABSTRACTS OF JAPAN, vol. 8, no. 112 (M-298) [1549], 25th May 1984; & JP - A - 59 21 944 (YAZAKI SOUGIYOU K.K.) 04-02-1984 | 2,6 | **TECHNICAL FIELDS SEARCHED (Int. Cl.4)** |
| A | FR-A-2 470 938 (OLIVET)<br>* Page 1, line 35 - page 2, line 5; page 3, line 27; page 3, line 36 - page 4, line 13; figures 1,2 * | 1,3-5 | F 28 D<br>F 24 H |
| A | US-A-3 339 629 (D.E. HERVEY)<br><br>* Column 2, line 71 - column 3, line 2; column 4, line 61 - column 5, line 13; figures 1,5 *<br><br>--- -/- | 1,3,4<br>10 | |

The present search report has been drawn up for all claims

| Place of search | Date of completion of the search | Examiner |
|---|---|---|
| THE HAGUE | 31-10-1985 | BELTZUNG F.C. |

EPO Form 1503 03.82

European Patent
Office

**EUROPEAN SEARCH REPORT**

| DOCUMENTS CONSIDERED TO BE RELEVANT | | | Page 2 | |
|---|---|---|---|---|
| Category | Citation of document with indication, where appropriate, of relevant passages | Relevant to claim | CLASSIFICATION OF THE APPLICATION (Int. Cl.4) | |
| A | US-A-4 327 560 (LEON et al.)<br>* Column 5, lines 1-40; column 7, lines 20-28; column 10, lines 57-59; figures 1-3 *<br><br>- - - | 7,8,10 | | |
| A | US-A-4 246 466 (RICE et al.)<br>* Column 3, line 47 - column 4, line 20; figures 1,2 *<br><br>- - - | 9 | | |
| A | US-A-4 299 277 (McGREGOR)<br>* Column 2, lines 36-68; figures 1b,4 *<br><br>- - - - - | 10 | | |
| | | | TECHNICAL FIELDS SEARCHED (Int. Cl.4) | |

The present search report has been drawn up for all claims

| Place of search | Date of completion of the search | Examiner |
|---|---|---|
| THE HAGUE | 31-10-1985 | BELTZUNG F.C. |